# EUROPEAN PATENT APPLICATION

(11) **EP 2 336 195 A1**
(43) Date of publication of application: **22.06.2011**
(21) Application number: 09179524.5
(22) Date of filing: 16.12.2009
(51) Int. Cl.: C08B 37/00, C08H 8/00, D21C 3/00

(54) **Process for Treatment of Lignocellulosic Biomass Material**

(71) Applicant: Shell Internationale Research Maatschappij B.V., 2596 HR The Hague (NL)
(72) Inventor: Van der Heide, Evert, 1031 HW Amsterdam (NL); Zhang, Ting, 1031 HW Amsterdam (NL)
(74) Representative: Matthezing, Robert Maarten

(57) **Abstract**

A process for obtaining sugars and lignin from lignocellulosic biomass material, comprising the steps of:
(a) contacting the lignocellulosic biomass material with a solvent comprising at least 40 wt.% of formic acid and at least 50 wt.% of an organic acid at a temperature of at least 100°C and at a pressure of at most 10 bar(a) to obtain a first liquid stream comprising lignin and hemicellulose and a second stream comprising solid cellulose;
(b) separating the first liquid stream from the second stream; (c) separating the solvent from the first liquid stream at a temperature in the range of from 30°C to 80°C to obtain a concentrate; (d) diluting the concentrate with water to obtain precipitated lignin and a second liquid stream comprising dissolved hydrolysed hemicellulose; and (e) separating the precipitated lignin from the second liquid stream.

## Description

### Field of the invention

The present invention relates to a process for treatment of lignocellulosic biomass material to separate the lignocellulosic biomass material into cellulose, hemicellulose and lignin in order to make it suitable for the production of hydrocarbon compounds.

### Background of the invention

With the diminishing supply of crude oil, the use of renewable energy sources is becoming increasingly important as a feedstock for production of hydrocarbon compounds. Plants and animal biomass are being used to produce liquid and gaseous hydrocarbon compounds. One of the advantages of using biomass is that the CO₂ balance is more favourable as compared with the conventional hydrocarbon feedstock.

One of the most commonly used biomass material used is lignocellulosic material for instance, agriculture waste, forest residue, wood chips, straw, chaff, grain, grasses, corn, corn husks, weeds, aquatic plants, hay or any cellulose containing biological material or material of biological origin. These biomass materials primarily consist of cellulose, hemicellulose, and lignin bonded together in a complex gel structure along with small quantities of extractives, pectins, proteins, and ash. Cellulose and hemi-cellulose, when hydrolysed into sugars, can be further converted into ethanol and other useful products and intermediates through well established microbiological fermentation technologies, or through thermochemical conversions, such as aqueous phase reforming.

Lignin present in the lignocellulosic biomass material is an attractive renewable replacement for phenolic polymer feedstocks. This is due to its polyphenolic nature and low toxicity, together with properties such as dispersing, binding, complexing and emulsifying, thermal stability, specific UV-absorbing, water repellent and conductivity characteristics.

Separation of cellulose from other biomass constituents is complicated by the fact that lignin is intertwined and linked in various ways with cellulose and hemicellulose. Successful commercial use of the individual constituents of biomass is dependent on the ease of their accessibility for further processing.

Existing processes for obtaining cellulose, sugars and lignin from lignocellulosic biomass involve chemical and/or enzymatic treatment of the biomass to hydrolyse cellulose and hemicellulose into the respective sugars. Many of the current chemical processes for conversion of lignocellulosic biomass to cellulose, sugars and lignin require expensive solvents. Other processes require extreme hydrolysis conditions such as heating the lignocellulosic biomass at an elevated temperature, which result in degradation of released sugars.

Enzymatic processes require the use of expensive biocatalysts and extremely stringent processing conditions. Existing processes for the recovery of lignin known in the art include the sulfite or the Kraft wood pulping processes wherein lignin is recovered as lignosulfonate containing significant amounts of contaminants such as free sulphurous acid and sulphates. The recovered lignin molecules lack stereoregularity, with repeating units being heterogeneous and complex as described in US 5,866,642 and US 5,202,403. This requires further treatment in order to produce quality products. The costs associated with the purification and functionalisation are high and therefore limit the commercial use of the high quality products.

The use of organic solvents for extraction of sugars and lignin is known to improve the quality of the resulting lignin, but the use of a catalyst in combination with various types of solvents under severe conditions often produces lignin having altered reactivity. The publication "Pretreatment of Miscanthus x giganteus using the Ethanol Organosolv Process for Ethanol Production" by Nicolas Brosse, Poulomi Sannigrahi and Arthur Ragauskas, Ind. Eng. Chem. Res. 2009, 48, 8328-8334, discloses the use of an organosolv process using ethanol and sulphuric acid for the pretreatment of lignocellulose. However, the process conditions use high pressure that requires expensive material, and increases explosion and fire hazard when employed on an industrial scale. Moreover, the use of ethanol in the first pre-treatment stage requires separation of the ethanol for useful recycling from this stage already, which is energy consuming and costly due to the size of the streams to separate.

Accordingly, most of the current processes for obtaining sugars and lignin from lignocellulosic biomass are either expensive and or require extreme conditions. Therefore, there is a need for an economical process for low cost production of sugars and lignin from lignocellulosic biomass material. The process should be able to separate sugars and lignin efficiently, and yield lignin and sugars of desirable characteristics. Further, the process should be able to separate lignocellulosic biomass material to cellulose, sugars and lignin under normal or mild conditions of temperature and pressure to avoid degradation of sugars.

### SUMMARY OF THE INVENTION

Accordingly, the present invention provides a process for obtaining sugars and lignin from lignocellulosic biomass material, comprising the steps of: (a) contacting the lignocellulosic biomass material with a solvent comprising at least 40 wt.% of formic acid and at least 50 wt.% of an organic acid at a temperature of at least 100°C and at a pressure of at most 10 bar(a) to obtain a first liquid stream comprising lignin and hemicellulose and a second stream comprising solid cellulose; (b) separating the first liquid stream from the second stream; (c) separating the solvent from the first liquid stream at a temperature in the range of from 30°C to 80°C to obtain a concentrate; (d) diluting the concentrate with water to obtain precipitated lignin and a second liquid stream comprising dissolved hydrolysed hemicellulose; and (e) separating the precipitated lignin from the second liquid stream.

The stream comprising sugars can be further subjected to a microbiological fermentation process, a microbiological anaerobic digestion, and/or a thermochemical conversion process.

### Brief description of the drawings

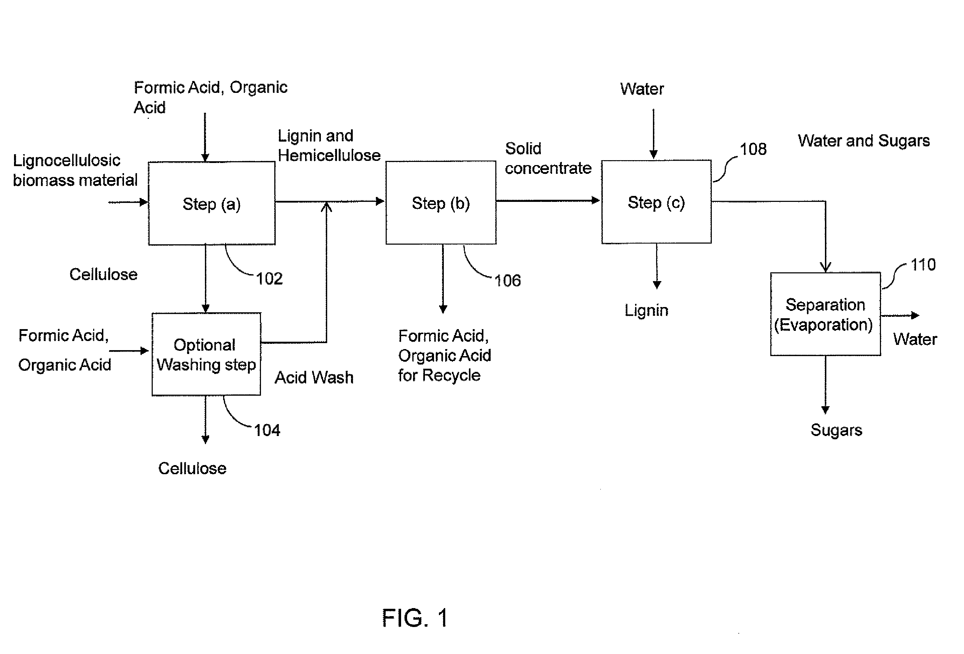

Figure 1 shows a schematic diagram of the process according to the present invention.

### Detailed description

It has now been found that sugars and lignin can be obtained from lignocellulosic biomass material under mild conditions when the lignocellulosic biomass material is subjected to a series of steps including subjecting the lignocellulosic biomass material to an acid treatment in the presence of formic acid and an organic acid, separating the solid stream comprising cellulose from a liquid stream comprising hydrolysed hemicellulose and lignin, separating the solvent from the liquid stream at mild conditions to obtain a solid concentrate comprising hydrolysed hemicellulose and lignin, and treating the solid concentrate with water to obtain a solid stream comprising lignin and a liquid stream comprising the sugars derived from hydrolysed hemicellulose, and separating the precipitated lignin from the dissolved sugars. The cellulose stream preferably may be further processed for the production of chemicals such as ethanol, while the sugars and lignin streams may advantageously be further processed for production of chemicals and intermediates.

Lignocellulosic biomass material as referred to in the present invention is the naturally obtained cellulosic material comprising agriculture waste, forest residue, wood chips, straw, chaff, grain, grasses, corn, corn husks, weeds, aquatic plants, hay and any cellulose containing biological material or material of biological origin, also including municipal waste or waste. The subject process is in particularly suited for conversion of non-wood lignocellulose, particularly grass-derived lignocellulose. Typical grasses include wheat straw, but also miscanthus, sweet sorghum and bamboo.

The major constituents of lignocellulose typically include hemicelluloses in an amount of from 20 to 30%wt., an amorphous polymer of five and six carbon sugars; lignin in an amount of from 5 to 30%wt,, a highly cross-linked polymer of phenolic compounds; and cellulose in an amount of from 30 to 40%wt, a highly crystalline polymer of cellobiose, a glucose dimer. The cellulose, hemicellulose, and lignin are bonded together in a complex gel structure along with small quantities of extractives, pectins, proteins, and ash. Cellulose and hemicellulose, when hydrolysed into their sugars, can be converted into ethanol or other useful compounds through well established fermentation technologies. These sugars may also advantageously form the feedstock for production of a variety of chemicals and polymers, through microbial fermentation or through thermochemical processes, such as aqueous phase reforming.

### Detailed description of the drawing

The process of obtaining sugars and lignin from the lignocellulosic biomass material according to the present invention is explained in detail in conjunction with the process flow diagram shown in FIG. 1. As shown, the process includes subjecting the biomass material to an acid treating step (102) at an elevated temperature in the presence of a solvent. In the acid treating step (102), the biomass-to-solvent mass ratio is preferably in the range of from 2:1 to 1:50, more preferably of from 1:5 to 1:20.

The acid treating step (102) is carried out in a reactor which is preferably a batch reactor, a continuously stirred tank reactor or a slurry reactor having an arrangement to move the lignocellulosic biomass mechanically. In operation, the reactor contains the lignocellulosic biomass material on which the solvent is sprayed. The lignocellulosic biomass material preferably has an average constituent thickness of at most 2.5 cm, more preferably the thickness is up to 0.2 cm. The solvent comprises at least 40 %wt. of formic acid, and at least 50 %wt. in total of an organic acid. The organic acid used in the present invention is preferably selected from the group consisting of C1-C8 aliphatic organic acids, such as formic acid, acetic acid and/or proprionic acid; levulinic acid, oxalic acid, and/or citric acid. Preferably, the organic acid that is added to the process is formic acid, while acetic acid will be formed inherently during the process.

The solvent advantageously aids in the hydrolysis of the hemicellulose and also helps in destructuring (decomposing) of the lignin. The acid treating step (102) is carried out at a temperature of at least 80°C, preferably in the range of 90°C to 120°C and at a pressure of at least 1 bar (a), preferably in the range of 1 bar (a) to 5 bar (a). The upper temperature limit in step (a) is largely determined by the thermal stability of the organic acids used, and preferably is at most 195°C, more preferably at most 180°C since formic acid becomes thermally instable at this temperature.

In the acid treating step (102), a large part of the hemicellulose is usually hydrolysed to monomer sugars. The sugars formed are mainly C5 sugars such as xylose. Further, the covalent linking of lignin to hemicellulose is typically weakened.

The acid treating step (102) results in the formation of two streams: a first liquid stream comprising hydrolysed hemicellulose, and lignin and a second stream comprising solid cellulose. The hydrolysed hemicellulose comprises mainly monomeric sugars, such as xylose, which are dissolved in the liquid stream at the treatment conditions.

The two streams formed as a result of the acid treating step (102) can be separated using separation techniques known in the art such as pressing in a screw press, and filtration. It should be appreciated that the acid treating step and the separation step can be carried out simultaneously.

The solid stream comprising cellulose is preferably subjected to a washing step (104). The purpose of the washing step (104) is to remove the residual hemicellulose and lignin from solid stream comprising cellulose. This is due to the fact that the cellulose fibers will comprise a certain amount of liquid which usually cannot be removed completely by a single separation operation.

During the washing step (104), the solid stream comprising cellulose is preferably washed with the solvent used in acid treating step (102), more preferably with fresh solvent. The washing step (104) results in the formation of two streams: a solvent wash stream comprising further hemicellulose and lignin along with spent solvent, and a solid stream comprising cellulose. The solvent wash stream is preferably blended with the liquid stream comprising hemicellulose and lignin obtained from the acid treating step (102) prior to step (c), but may also be at least in part be used as solvent in step (a).

The liquid stream comprising hemicellulose and lignin from the acid treating step (102) and the solvent wash stream from the washing step (104) are preferably subjected to a first separation step to remove the solvent, at a temperature range of 30°C to 80°C to avoid formation of side products and polymers.

This advantageously may be performed as an evaporation step (106) at a temperature range of 30°C to 80°C. The solvent is evaporated during the first evaporation step (106), retaining a solid concentrate comprising hemicellulose and lignin. The evaporated solvent is preferably recycled for use in the acid treating step (102) and/or the washing step (104). The evaporated solvent can be recycled using the methods of recycling known in the prior art, which have been well established in particular the case when the organic acid is formic acid.

The solid concentrate stream obtained from the first evaporation step (106) is preferably subjected to a precipitation step (108), wherein the solid concentrate is diluted with water. The dilution with water leads to precipitation of lignin and the sugars present in the solid concentrate stream gets dissolved in water. The solid concentrate stream and water are preferably contacted in a solid-to-liquid ratio in the range of from 1:2 to 1:10. The precipitation step (108) results in formation of two streams: a liquid stream comprising hydrolysed hemicellulose, i.e. mainly sugars dissolved in water, and precipitated lignin. The precipitated lignin is essentially free of re-precipitated sugars because the sugars and other dissolved materials remain in solution at all temperatures of the reaction.

The two streams formed at as result of the precipitation step (108) are preferably separated using suitable separation techniques, for example a filter press. The two streams can advantageously be subjected to a sedimentation process to augment the separation.

The filtration is preferably vacuum aided to speed up the process. The solid stream containing lignin is preferably retained on the filter mesh and the liquid stream containing sugars is collected as a filtrate in the vessel. The lignin may be dried before it is subjected to further processing.

The liquid stream comprising sugars obtained after the separation step is preferably subjected to a second separation step (110) where water gets separated to obtain a solid stream comprising sugars. This may preferably be done by evaporation, or a membrane separation. Alternatively, the sugars may advantageously be crystallized from the liquid stream, preferably using a crystallizer, or a combination of these separation treatments may be applied. Applicants have found that the sugars could be crystallized in high quality from this stream; and the purity could be advantageously be improved by recrystallization.

The precipitated lignin from the separation step may be subjected to a further washing step where the solid stream comprising lignin is contacted with water to remove residual sugars from lignin. The washing step results in the formation of two streams: a liquid stream comprising water and dissolved sugars; and a solid stream comprising lignin. The liquid stream obtained from the washing step may preferably be blended with the liquid stream obtained from the precipitation step (108) before the second evaporation step (110).

The sugars obtained from hydrolysed hemicellulose in the separation step can be further processed by microbiological fermentation process, a microbiological anaerobic digestion, and/or a thermochemical conversion process, to obtain furfural derivatives or levulinic acid, or hydrocarbons. The sugars obtained may also advantageously be subjected to a fermentation reaction to form products such as ethanol, butanol, or lipids.

The liquid stream in an embodiment of the present invention may also be subjected to an anaerobic digestion reaction to form methane that can be further used as fuel.

The process according to the invention is further illustrated by means of the following non-limiting example.

### Example 1

In a process line-up as shown in the Figure, 20 grams of wheat straw was subjected to acid treatment in the presence of pure formic acid at a temperature of 105°C and at a pressure of 1 bar (a) for a time period of three hours. Wheat straw was treated with formic acid in a mass ratio of 1:10. The cellulosic stream obtained from the acid treatment step was subjected to an acid wash with a solid to liquid ratio of 1:10. Concentrated formic acid was used in the acid wash step. 46.2% of the wheat straw was obtained as cellulosic residue after the acid treatment and the acid wash step. The filtrate from the acid treatment and the acid wash steps was subjected to evaporation at a temperature of in the range of from 70°C to 76°C at a pressure of 85 mbar to 138 mbar. The evaporation was carried out in a vacuum rotary evaporator. The evaporation was done until the solids content of the concentrate reached 69.1%. The solid concentrate was diluted with water with a solid to liquid ratio of 1:2. Dilution with water lead to precipitation of lignin, while the sugars dissolved in water. Precipitated lignin was separated from mixture using a filtration process and dried. 24.2% of the wheat straw was obtained as high quality lignin. Sugars were separated from the water solution by evaporation, yielding 29.6% as sugars.

## Claims

1. A process for obtaining sugars and lignin from lignocellulosic biomass material, comprising the steps of:
(a)contacting the lignocellulosic biomass material with a solvent comprising at least 40 wt.% of formic acid and at least 50 wt.% of an organic acid at a temperature of at least 100°C and at a pressure of at most 10 bar(a) to obtain a first liquid stream comprising lignin and hemicellulose and a second stream comprising solid cellulose;
(b) separating the first liquid stream from the second stream;
(c) separating the solvent from the first liquid stream at a temperature in the range of from 30°C to 80°C to obtain a concentrate;
(d) diluting the concentrate with water to obtain precipitated lignin and a second liquid stream comprising dissolved hydrolysed hemicellulose; and
(e) separating the precipitated lignin from the second liquid stream.

2. The process according to claim 1, wherein the organic acid used in step a) is selected from the group consisting of C1-C8 aliphatic organic acids, levulinic acid, oxalic acid, and/or citric acid.

3. The process according to claim 1 or 2, further comprising washing the solid stream with the solvent used in step a), and adding the obtained spent solvent to the first liquid stream prior to step (c).

4. The process according to any one of the preceding claims, comprising diluting the solid concentrate with water, wherein the mass ratio of the concentrate to water is in the range of from 2:1 to 1:10.

5. The process according to any one of the preceding claims, comprising separating precipitated lignin by filtration and/or centrifugation.

6. The process according to any one of the preceding claims, comprising obtaining dissolved hydrolysed hemi-cellulose from the liquid stream obtained in step (d) by evaporating water and remnant acid.

7. The process according to claim 6, comprising neutralising the liquid stream prior to the evaporation.

8. The process according to any one of the preceding claims, comprising removing sugars from the dissolved hydrolysed hemi-cellulose from the liquid stream obtained in step (d) by at least one crystallization step.

9. The process according any one of claims 1 to 7 comprising subjecting the hydrolysed hemi-cellulose to a microbiological fermentation process, a microbiological anaerobic digestion, and/or a thermochemical conversion process.
